# EUROPÄISCHE PATENTSCHRIFT

(11) **EP 2 038 152 B1**
(45) Veröffentlichungstag und Bekanntmachung des Hinweises auf die Patenterteilung: **17.07.2013**
(21) Anmeldenummer: 07729017.9
(22) Anmeldetag: 11.05.2007
(51) Int. Cl.: B60T 8/1755, B60T 8/17, B60T 8/32

(54) **VERFAHREN UND STEUERGERÄT ZUR ERKENNUNG EINES ANHÄNGERBETRIEBS BEI EINEM ZUGFAHRZEUG**
METHOD AND CONTROL DEVICE FOR IDENTIFYING A TRAILER OPERATION OF A TOWING VEHICLE
PROCÉDÉ ET APPAREIL DE COMMANDE POUR IDENTIFIER LE FONCTIONNEMENT D'UNE REMORQUE POUR UN VÉHICULE TRACTEUR

(30) Priorität: 27.06.2006 DE 102006029365; 21.11.2006 DE 102006054703
(43) Veröffentlichungstag der Anmeldung: 25.03.2009
(73) Patentinhaber: Robert Bosch GmbH, 70442 Stuttgart (DE)
(72) Erfinder: MERGENTHALER, Rolf-Hermann, 71229 Leonberg (DE); NENNINGER, Gero, 71732 Tamm (DE); SCHUMANN, Andreas, 71732 Tamm (DE); BRANDER, Michael, 74196 Neuenstadt (DE); BERDING, Lars, 71711 Steinheim/Murr (DE); FELLKE, Daniel, 70182 Stuttgart (DE)
(86) Internationale Anmeldenummer: PCT/EP2007/054565
(87) Internationale Veröffentlichungsnummer: WO 2008/000548

(56) Entgegenhaltungen:
- DE-A1- 10 030 050
- DE-A1- 19 744 066

## Beschreibung

### Stand der Technik

Die Erfindung betrifft ein Verfahren zur Erkennung, ob sich ein Fahrzeug in einem Anhängerbetrieb befindet oder nicht gemäß Anspruch 1 sowie ein Steuergerät zur Durchführung eines derartigen Verfahrens gemäß Anspruch 23.

Die DE 199 64 048 A1 beschreibt ein Fahrdynamikregelungssystem mit einer Anhängerschlingerlogik zum Stabilisieren eines Straßenfahrzeugs. Das Zugfahrzeug wird in Bezug auf Schlingerbewegungen überwacht, wobei bei Erkennen einer Schlingerbewegung das Fahrzeug automatisch abgebremst oder ein Giermoment eingeprägt wird, das der Schlingerbewegung entgegenwirkt.

Die bekannte Änhängerschlingerlogik wird in der Regel erst aktiviert, wenn erkannt wird, ob ein Anhänger an das Zugfahrzeug angehängt ist oder nicht. Stand der Technik sind Vorrichtungen zum Erkennen eines Anhängers, bei denen das Signal zur Erkennung eines Anhängerbetriebs einer Vorrichtung entnommen wird, welche eine direkte Verbindung des Anhängers mit dem Zugfahrzeug herstellt. Meist wird das Signal abgeleitet, indem die Belegung eines Bremslichtsteckers geprüft und in der Folge auf Vorhandensein eines Anhängers geschlossen wird.
Im Besonderen wird in der gattungsgemäβen DE 197 44 066 A1 eine Vorrichtung zum Erkennen eines Anhängerbetriebes bei einem Kraftfahrzeug beschrieben, bei welchem abhängig von dem zum Anhänger angesteuerten Druck eine den Druckaufbau charakterisierende Größer ermittelt wird, auf deren Basis festgestellt wird, ob ein Anhänger angekoppelt ist oder nicht. Die in der DE 197 44 066 A1 beschriebene Vorrichtung setzt ein System mit einer Komponente zur Erfassung des zum Anhänger gesteuerten Drucks, in der Regel zumindest einen gebremsten Anhänger, voraus. Diese Voraussetzungen sind nicht immer erfüllt, mit der Folge, dass eine Erkennung für diese Fälle nicht erfolgen kann.

In einigen Fällen können die genannten Herangehensweisen jedoch zu Fehlbelegungen der die Präsenz des Anhängers repräsentierenden Größe und daher zu Fehleingriffen des Fahrdynamikregelungssystems bzw. zu einem suboptimalen Verhalten bezüglich der Fahrdynamik-, Antriebs- und Bremsschlupfregelung sowie der Logiken zur Anhängerstabilisierung führen. Folgende Fälle können beispielsweise zu Fehlbelegungen der die Präsenz des Anhängers repräsentierenden Größe führen:
Die die Präsenz des Anhängers anzeigende Vorrichtung ist im Zugfahrzeug nicht vorhanden oder wird nicht verwendet. Beispielsweise besteht in außereuropäischen Ländern teilweise keine Verpflichtung zur Verwendung eines Bremslichtsteckers im Anhängerbetrieb.

Die die Präsenz des Anhängers anzeigende Vorrichtung wird nicht durch einen Anhänger, sondern durch eine andere Vorrichtung, beispielsweise einen Fahrradträger, belegt. In der Folge erhält das Fahrdynamikregelungssystem die Information, dass das Fahrzeug mit Anhänger betrieben wird, obwohl kein Anhänger an das Zugfahrzeug angehängt ist.

### Offenbarung der Erfindung

### Technische Aufgabe

Der Erfindung liegt die Aufgabe zugrunde, ein verbessertes Verfahren zur Erkennung eines Anhängerbetriebes bei einem Zugfahrzeug, insbesondere als Teil eines Fahrdynamikregelungsverfahrens, vorzuschlagen, mit dem zuverlässig erkannt werden kann, ob das Zugfahrzeug sich im Anhängerbetrieb befindet oder nicht. Ferner besteht die Aufgabe darin, ein entsprechendes Steuergerät zur Durchführung des Verfahrens vorzuschlagen.

### Technische Lösung

Diese Aufgabe wird mit einem Verfahren mit den Merkmalen des Anspruchs 1 sowie mit einem Steuergerät mit den Merkmalen des Anspruchs 23 gelöst.

Vorteilhafte Weiterbildungen sind in den Unteransprüchen angegeben.

Der Erfindung liegt der Gedanke zugrunde, anhand der Auswertung einer einem Fahrdynamikregelungssystem ohnehin zur Verfügung stehenden Größe darauf zu schließen, ob sich das Zugfahrzeug in einem Anhängerbetrieb befindet oder nicht. Auf Basis des Ergebnisses der Auswertung kann eine Anhängerlogik und/oder ein Fahrdynamikregelungssystem modifiziert, insbesondere aktiviert, deaktiviert, sensibilisiert und/oder desensibilisiert werden. Wird das Vorliegen eines Anhängerbetriebs erkannt, so kann die Anhängerschlingerlogik beispielsweise dadurch angepasst werden, dass diese empfindlicher eingestellt wird. Zusätzlich können Eingriffsschwellen abgesenkt werden. Entsprechend wird die Anhängerschlingerlogik abgeschwächt bzw. Eingriffsschwellen angehoben und dadurch Fehlanregungen verhindert, für den Fall, dass die Anhängererkennung keinen an das Zugfahrzeug angehängten Anhänger erkennt. Das erfindungsgemäße Verfahren kann jedoch auch unabhängig von einem Fahrdynamikregelungssystem eingesetzt werden und beispielsweise dazu dienen, bei Erkennen eines Anhängerbetriebs ein entsprechendes Signal auszugeben, insbesondere eine Signalleuchte im Fahrzeugcockpit zu aktivieren.

Erfindungsgemäß ist vorgesehen, dass das Verfahren zur Anhängererkennung auf einem Vergleich eines den Fahrzustand charakterisierenden Ist-Signals mit einem entsprechenden Soll-Signal basiert.

Es ist vorgesehen, dass der Anhängererkennung ein Vergleich eines Ist-Fahrzeuglängsbeschleunigungssignals mit einem Soll-Fahrzeuglängsbeschleunigungssignals zugrunde gelegt wird. Bei der Soll-Fahrzeuglängsbeschleunigung handelt es sich um die aus einem Referenzmodell ermittelte, insbesondere aufgrund einer Fahrervorgabe, zu erwartende Längsbeschleunigung des Fahrzeugs. Dabei kann ausschließlich ein gemessenes Fahrzeuglängsbeschleunigungssignal oder ausschließlich ein anhand von Zustandsgrößen berechnetes Fahrzeuglängsbeschleunigungssignal oder beide Fahrzeuglängsbeschleunigungssignale in den Vergleich mit einfließen. Das gemessene Ist-Fahrzeuglängsbeschleunigungssignal wird mittels mindestens eines Beschleunigungssensors gemessen, wohingegen das errechnete bzw. geschätzte Fahrzeuglängsbeschleunigungssignal beispielsweise durch zeitliche Ableitung mindestens eines Fahrzeugradgeschwindigkeitssignals ermittelt wird. Bei dem erfindungsgemäßen Vergleich können sowohl positive Fahrzeuglängsbeschleunigungssignale als auch durch Bremsmanöver verursachte, negative Fahrzeuglängsbeschleunigungssignale berücksichtigt werden.

Das Soll-Fahrzeuglängsbeschleunigungssignal wird anhand eines Referenzmodells mit mindestens einer Eingangsgröße ermittelt. Zur Ermittlung der gewünschten positiven oder negativen Soll-Beschleunigung eignet sich als Eingangsgröße für das Referenzmodell insbesondere die Gaspedalstellung bzw. der Gaspedalweg und/oder die Gaspedalbeschleunigung, ebenso wie der Bremsdruck. Zusätzlich oder alternativ können beispielsweise als Eingangsgrößen die Motordrehzahl und/oder die aktuelle Getriebeübersetzung berücksichtigt werden.

In Ausgestaltung der Erfindung ist mit Vorteil vorgesehen, dass anhand der Bewertung eines Vergleichswertes auf einen Anhängerbetrieb geschlossen wird. Bevorzugt entspricht der Vergleichswert der Differenz zwischen Soll-Fahrzeuglängsbeschleunigung und Ist-Fahrzeuglängsbeschleunigung. Gegebenenfalls können zusätzlich weitere Größen und/oder Korrekturfaktoren in die Ermittlung des Vergleichswertes mit einfließen. Zusätzlich oder alternativ können Filterverfahren, insbesondere die Kalmanfilterung, bei der Berechnung des Vergleichswertes eingesetzt werden.

Gemäß einer zweckmäßigen Weiterbildung der Erfindung ist vorgesehen, dass die Differenz zwischen Soll-Fahrzeuglängsbeschleunigung und Ist-Fahrzeuglängsbeschleunigung durch Subtraktion der mittels eines Beschleunigungssensors gemessenen Ist-Fahrzeuglängsbeschleunigung von der Soll-Fahrzeuglängsbeschleunigung aus dem Referenzmodell erfolgt. Je nach Umsetzung der Differenzbildung in einem Algorithmus können selbstverständlich die Vorzeichen vertauscht werden.

Alternativ dazu ist es denkbar, zur Differenzbildung die unter Berücksichtigung mindestens einer Fahrzeugraddrehzahl, einer Fahrzeugradgeschwindigkeit und/oder einer Fahrzeugradbeschleunigung berechnete Ist-Fahrzeuglängsbeschleunigung von der Soll-Fahrzeuglängsbeschleunigung abzuziehen. Um zu verhindern, dass ein Anhänger nicht erkannt wird, weil sich das Fahrzeug in einer Bergauf- oder Bergabfahrt befindet und die Straßenneigung dem Fahrerwunsch entgegenwirkt, wobei es sogar möglich ist, dass beispielsweise die durch die Masse eines Anhängers hervorgerufenen Beschleunigungs- bzw. Verzögerungseffekten durch eine entsprechend große Straßenneigung vollkommen kompensiert werden, ist in Ausgestaltung der Erfindung vorgesehen, dass der Vergleichswert, insbesondere die Differenz zwischen Soll-Fahrzeuglängsbeschleunigung und Ist-Fahrzeuglängsbeschleunigung um die durch die Fahrbahnneigung verursachte Beschleunigungskomponente bereinigt wird. Hierzu ist vorgesehen, dass von dem Vergleichswert, insbesondere von der Differenz, die gemessene Ist-Fahrzeuglängsbeschleunigung subtrahiert und die errechnete Fahrzeuglängsbeschleunigung addiert wird. Die errechnete Ist-Fahrzeuglängsbeschleunigung beinhaltet im Gegensatz zu der gemessenen Ist-Fahrzeuglängsbeschleunigung nicht die durch die Fahrbahnneigung verursachte Beschleunigungskomponente, so dass im Ergebnis die durch die Fahrbahnneigung verursachte Beschleunigungskomponente von dem Vergleichswert, bzw. von der Differenz abgezogen wird. Auch hier ist zu berücksichtigen, dass selbstverständlich bei der Implementierung in einem Algorithmus die Vorzeichen vertauschbar sind.

Übersteigt der Vergleichswert in einem Abfragezyklus einen vorgegebenen ersten Schwellenwert, so wird dies als Anhängerbetrieb gewertet. Beispielsweise kann unmittelbar auf einen Anhängerbetrieb erkannt werden, oder es wird der Zählerstand eines Zählers geändert, vorzugsweise erhöht.

In Weiterbildung der Erfindung ist mit Vorteil vorgesehen, dass es als Nicht-Anhängerbetrieb gewertet wird, wenn der Vergleichswert einen zweiten Schwellenwert unterschreitet. Dabei kann entweder unmittelbar auf einen Nicht-Anhängerbetrieb erkannt werden oder zunächst der Zählerstand eines Zählers geändert, vorzugsweise erniedrigt werden.

Mit Vorteil ist vorgesehen, dass der erste und der zweite Schwellenwert unterschiedlich groß sind. Bevorzugt ist der erste Schwellenwert größer als der zweite Schwellenwert. Hierdurch wird ein Hysterese-Effekt erreicht. Ist der Vergleichswert zwar kleiner als der erste Schwellenwert, jedoch noch größer als der zweite Schwellenwert, so wird der Zählerstand nicht geändert. Ist der Vergleichswert größer als ein erster Schwellenwert, so wird dies als Anhängerbetrieb gewertet.

Auf einen Anhängerbetrieb wird erkannt, wenn ein vorgegebener Zählerstand des Zählers erreicht wird.

Bevorzugt ist der obere und/oder der untere, d.h. der maximale bzw. minimale Zählerstand begrenzt. Somit sind nach erfolgter Anhängererkennung nur eine begrenzte Anzahl von Abfrageschritten notwendig, in denen der Vergleichswert den zweiten Schwellenwert unterschreitet, damit wieder auf einen Nicht-Anhängerbetrieb erkannt werden kann.

Da in dem für die Anhängererkennung interessanten Geschwindigkeitsbereich erhöhte Fahrtwiderstände nicht durch einen Off-Road-Betrieb verursacht werden können, weil eine Fahrt durch unwegsames Gelände bei mehr als 60 km/h unwahrscheinlich ist, muss eine entsprechend große Abweichung der Ist-Fahrzeuglängsbeschleunigung von der Soll-Fahrzeuglängsbeschleunigung eine andere Ursache, nämlich das Vorhandensein eines Anhängers, haben. Daher ist in Ausgestaltung der Erfindung vorgesehen, dass die Auswertung des Ist-Fahrzeuglängsbeschleunigungssignals und des Soll-Fahrzeuglängsbeschleunigungssignals erst bei Überschreiten einer Mindestgeschwindigkeit aktiviert wird.

Gemäß einer Weiterbildung der Erfindung ist vorgesehen, dass die Anhängererkennung nur für einen hinreichend großen Wert der Fahrerwunschgröße, beispielsweise des Gaspedalwegs oder der Änderung des Bremsvordrucks, aktiviert wird.

Wegen Störungen des Ist-Signals und/oder des Soll-Signals nach Bremsvorgängen ist in Ausgestaltung der Erfindung vorgesehen, dass eine Mindestzeitspanne nach einem Bremsvorgang eingehalten werden muss, bevor eine Auswertung des Ist-Signals und des Soll-Signals zur Anhängererkennung erfolgt.

### Kurze Beschreibung der Zeichnungen

Weitere Vorteile und zweckmäßige Ausführungen der Erfindung sind den weiteren Ansprüchen, der Figurenbeschreibung und den Zeichnungen zu entnehmen. Es zeigen:
- Fig. 1: eine schematisierte Darstellung eines Fahrdynamikregelungssystems und
- Fig. 2: ein schematisches Ablaufdiagramm eines Fahrdynamikregelungsverfahrens.

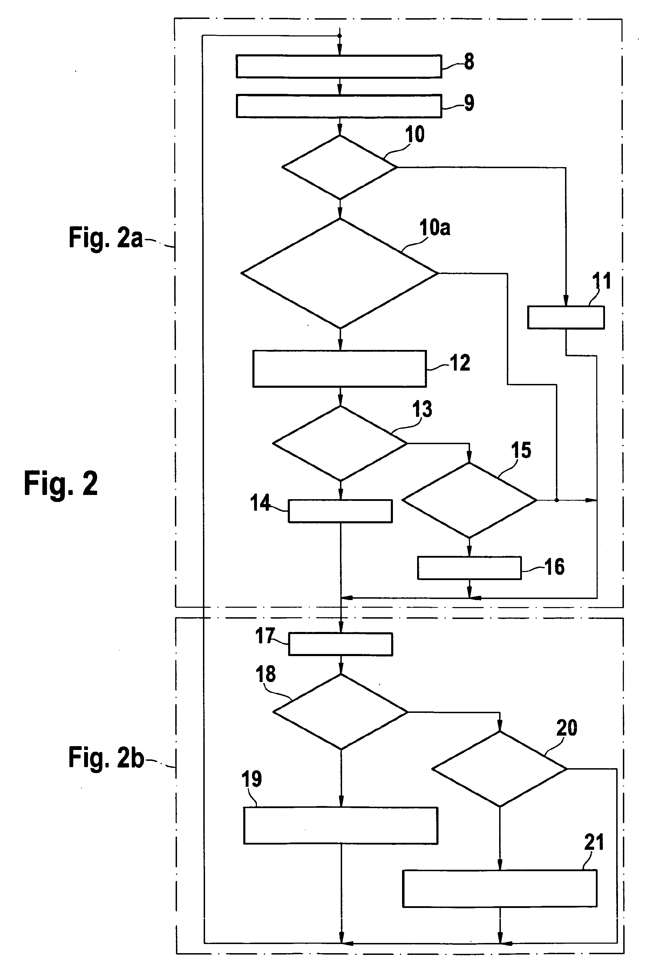

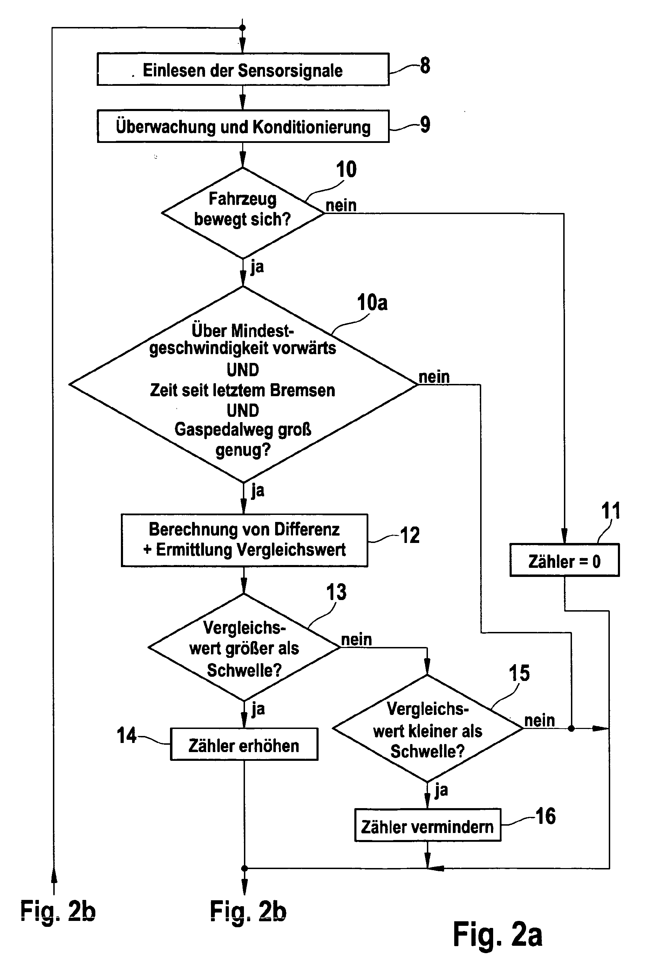

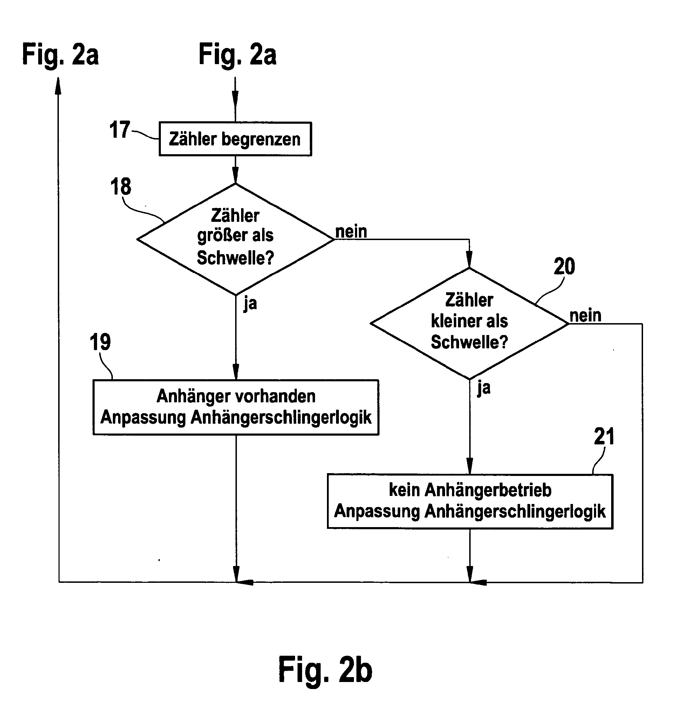

Figur 2 gliedert sich dabei in zwei mit Fig. 2a und Fig. 2b bezeichnete Teile, welche in den Zeichnungen als separate Figuren nochmals mitenthalten sind.

### Ausführungsformen der Erfindung

In den Figuren sind gleiche Bauteile und Bauteile mit gleicher Funktion mit den gleichen Bezugszeichen gekennzeichnet.

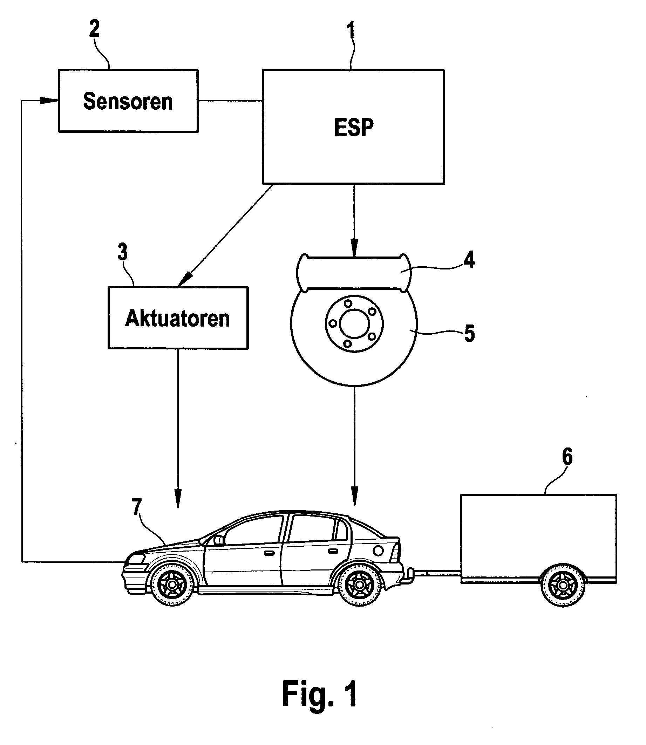

Fig. 1 zeigt eine schematische Darstellung der Systemarchitektur eines komplexen Regelsystems, das ein Fahrdynamikregelungssystem umfasst. Das Fahrdynamikregelungssystem umfasst ein Steuergerät 1, in dem ein Regelalgorithmus, im vorliegenden Fall ESP (elektronisches Stabilitätsprogramm) als Programmmodul sowie eine Anhängerschlingerlogik hinterlegt ist. Ferner umfasst das Fahrdynamikregelungssystem eine Sensorik 2 zur Bestimmung des Ist-Verhaltens, also mindestens eines Ist-Signals sowie mehrere Stellglieder 3, 4, 5, wie beispielsweise ein Motor-Steuergerät, einen Lenksteller etc. sowie eine Radbremse 5 zur Beeinflussung des Fahrverhaltens. Bei Überschreiten einer vorgegebenen Eingriffsschwelle, d.h. einer vorgegebenen Regelabweichung, wird beispielsweise die Bremse 5 betätigt, um das Gierverhalten eines Fahrzeugs 7 an einen Sollwert anzupassen und somit das Fahrzeug zu stabilisieren. Im Anhängerbetrieb, also bei angehängtem Anhänger 6 ist es denkbar, weitere Eingriffe durchzuführen um Fahrzustände, welche insbesondere im Zugbetrieb auftreten, z.B. ein Anhängerschlingern, zu stabilisieren.

In dem Steuergerät 1 ist ein Referenzmodell implementiert, mittels dem anhand mindestens einer Eingangsgröße, beispielsweise der Gaspedalstellung und/oder Bremsvordrucks ein Soll-Signal ermittelt werden kann. Erfindungsgemäß vergleicht das Steuergerät 1 ein Ist-Signal mit dem Soll-Signal hinsichtlich bestimmter Eigenschaften und stellt somit in Abhängigkeit der Erfüllung bestimmter Zusammenhänge einen Anhängerbetrieb oder einen Nicht-Anhängerbetrieb fest.

Im Folgenden wird die Erfindung anhand eines Vergleichs von einem Ist-Fahrzeuglängsbeschleunigungssignal mit einem Soll-Fahrzeuglängsbeschleunigungssignal erläutert. Die Erfindung ist jedoch nicht auf einen derartigen Vergleich beschränkt.

In Fig. 2 ist eine mögliche Ausführungsform der erfindungsgemäßen Anhängererkennung gezeigt, die in ein Fahrdynamikregelungssystem, insbesondere ESP integriert ist. Die notwendigen Berechnungen und Vergleiche werden von dem Steuergerät 1 in Fig. 1 durchgeführt.

In einem ersten Verfahrensschritt 8 werden zunächst die Sensorsignale der Sensorik 2 gemäß Fig. 1 eingelesen und in einem zweiten Schritt 9 überwacht und konditioniert, insbesondere plausibilisiert. In einem darauf folgenden Schritt 10 wird überprüft, beispielsweise durch eine Überwachung der Fahrzeugradgeschwindigkeiten, ob sich das Fahrzeug 7 bewegt oder nicht. Bewegt es sich nicht, wird in einem Schritt 11 der später noch zu erläuternde Zähler zurückgesetzt.

Wird in Schritt 10 eine Fahrzeugbewegung erkannt, wird zunächst überprüft, ob sich das Fahrzeug mit einer Mindestgeschwindigkeit bewegt, um auszuschließen, dass etwaige Abweichungen der Soll-Fahrzeuglängsbeschleunigung von der Ist-Fahrzeuglängsbeschleunigung auf einen Off-Road-Betrieb zurückzuführen sind. Ferner wird überprüft, ob eine Mindestzeit nach dem letzten Bremsvorgang eingehalten ist, um eine Störung der eingelesenen Sensorsignale zu vermeiden. Zusätzlich wird überprüft, ob das Eingangssignal für ein Referenzmodell zur Ermittlung der Soll-Fahrzeuglängsbeschleunigung ausreichend groß ist. Nur wenn sämtliche Abfragen bejaht werden, wird in einem Schritt 12 eine Differenz zwischen einer in einem Referenzmodell bestimmten Soll-Fahrzeuglängsbeschleunigung und einer durch zeitliche Ableitung der Fahrzeugradgeschwindigkeit errechneten Ist-Fahrzeuglängsbeschleunigung berechnet. Ein derartiger Berechnungsschritt ist in einer Vielzahl von Fahrdynamikregelungssystemen bereits implementiert. Die Differenz, oder anders ausgedrückt ein Fahrwiderstandsrohwert, wird zur Bestimmung eines Vergleichswertes herangezogen. Der Vergleichswert oder Fahrwiderstandswert wird berechnet, indem von der genannten Differenz eine Beschleunigungskomponente abgezogen wird, die auf die Fahrbahnneigung zurückzuführen ist. Die Differenz wird also von dieser Beschleunigungskomponente bereinigt. Somit werden Kompensations- oder Verstärkungserscheinungen zwischen einer durch die zusätzliche Anhängermasse verursachten Beschleunigung oder Verzögerung und einer durch die Fahrbahnneigung, also der Erdbeschleunigung, verursachten Beschleunigung oder Verzögerung ausgeschlossen. In einem darauf folgenden Schritt 13 wird überprüft, ob der in Schritt 12 ermittelte Vergleichswert größer ist als ein erster Schwellenwert. Ist dies der Fall, wird in einem darauf folgenden Schritt 14 der Zählerstand eines Zählers erhöht. Ist der Vergleichswert kleiner als ein erster Schwellenwert, wird in einem Verfahrensschritt 15 überprüft, ob der Vergleichswert kleiner ist als ein zweiter Schwellenwert, wobei der zweite Schwellenwert kleiner ist als der erste Schwellenwert. Nur wenn dies der Fall ist, wird der Zählerstand des Zählers in Schritt 16 vermindert. Ist der Vergleichswert kleiner als der erste Wert, jedoch größer als der zweite Schwellenwert, erfolgt keine Änderung des Zählers (Hysterese).

In einem Verfahrensschritt 17 wird der maximale sowie der minimale Zählerstand begrenzt. In einem darauf folgenden Verfahrensschritt 18 wird überprüft, ob der Zähler einen ersten Zählerstand überschreitet. Ist dies der Fall, so wird in Schritt 19 erkannt, dass sich das Fahrzeug im Anhängerbetrieb befindet. Die Anhängerschlingerlogik und/oder das Fahrdynamikregelungssystem werden entsprechend angepasst, insbesondere aktiviert und/oder sensibilisiert.

Wird in Schritt 18 jedoch festgestellt, dass der Zählerstand kleiner als ein erster vorgegebener Zählerstand ist, wird in Schritt 20 überprüft, ob der Zähler kleiner ist als ein zweiter vorgegebener, niedriger Zählerstand. Ist dies nicht der Fall, erfolgt keine Bewertung, ob sich das Fahrzeug im Anhängerbetrieb befindet oder nicht. Es wird der in einem vorherigen Abfragezyklus erkannte Status beibehalten. Ist der Zählerstand jedoch kleiner als der zweite, vorgegebene Zählerstand, welcher kleiner ist als der erste vorgegebene Zählerstand, so wird in Schritt 21 erkannt, dass kein Anhängerbetrieb vorliegt. Es erfolgt eine entsprechende Anpassung der Anhängerschlingerlogik und/oder des Fahrdynamikregelungssystems. Insbesondere erfolgt eine Abschaltung bzw. Desensibilisierung der Anhängerschlingerlogik. Nach den Schritten 19, 20 bzw. 21 wird ein erneuter Zyklus durchfahren.

## Patentansprüche

1. Verfahren zur Erkennung eines Anhängerbetriebs bei einem Zugfahrzeugs, insbesondere als Teil eines Fahrdynamikregelungssystems mit einer Anhängerschlingerlogik zum Stabilisieren des Gespanns aus Zugfahrzeug und Anhänger, wobei die Erkennung des Anhängerbetriebs durch einen Vergleich eines den Fahrzustand charakterisierenden Ist-Signals mit einem korrespondierenden Soll-Signal erfolgt,
**dadurch gekennzeichnet,**
**dass** das Ist-Signal ein Ist-Fahrzeuglängsbeschleunigungssignal und das Soll-Signal ein Soll-Fahrzeuglängsbeschleunigungssignal ist.

2. Verfahren Anspruch 1,
**dadurch gekennzeichnet,**
**dass** das Soll-Signal anhand eines Referenzmodells mit mindestens einer Eingangsgröße, insbesondere dem Gaspedalweg, und/oder der Gaspedalbeschleunigung, und/oder der Motordrehzahl, und/oder der aktuellen Getriebeübersetzung, und/oder dem Bremsvordruck, ermittelt wird.

3. Verfahren nach einem der vorhergehenden Ansprüche,
**dadurch gekennzeichnet,**
**dass** zur Erkennung des Anhängerbetriebs ein Vergleichwert ermittelt wird, welcher der Differenz zwischen Soll- Fahrzeuglängsbeschleunigung und Ist- Fahrzeuglängsbeschleunigung entspricht, oder in dessen Bestimmung die Differenz zwischen Soll-Fahrzeuglängsbeschleunigung und Ist- Fahrzeuglängsbeschleunigung einfließt.

4. Verfahren nach Anspruch 3,
**dadurch gekennzeichnet,**
**dass** zur Differenzbildung eine von einem Beschleunigungssensor gemessene Ist-Fahrzeuglängsbeschleunigung von der Soll-Fahrzeuglängsbeschleunigung subtrahiert wird.

5. Verfahren nach Anspruch 3,
**dadurch gekennzeichnet,**
**dass** zur Differenzbildung eine unter Berücksichtigung mindestens einer Fahrzeugraddrehzahl und/oder einer Fahrzeugradgeschwindigkeit und/oder einer Fahrzeugradbeschleunigung errechnete Ist-Fahrzeuglängsbeschleunigung von der Soll-Fahrzeuglängsbeschleunigung subtrahiert wird.

6. Verfahren nach Anspruch 5,
**dadurch gekennzeichnet,**
**dass** der Vergleichswert um die durch die Fahrbahnneigung verursachte Beschleunigungskomponente bereinigt wird.

7. Verfahren nach Anspruch 6,
**dadurch gekennzeichnet,**
**dass** die Bereinigung des Vergleichswertes durch Subtraktion der gemessenen Ist-Fahrzeuglängsbeschleunigung und Addition der errechneten Ist-Fahrzeuglängsbeschleunigung erfolgt.

8. Verfahren nach einem der Ansprüche 3 bis 7,
**dadurch gekennzeichnet,**
**dass** es als Anhängerbetrieb gewertet wird, wenn der Vergleichswert einen ersten Schwellenwert überschreitet.

9. Verfahren nach Anspruch 8,
**dadurch gekennzeichnet,**
**dass** bei Überschreiten des ersten Schwellenwerts der Zählerstand eines Zähler geändert, vorzugsweise erhöht, wird.

10. Verfahren nach einem der Ansprüche 3 bis 9,
**dadurch gekennzeichnet,**
**dass** es als Nicht-Anhängerbetrieb gewertet wird, wenn der Vergleichswert einen zweiten Schwellenwert unterschreitet.

11. Verfahren nach Anspruch 10,
**dadurch gekennzeichnet,**
**dass** bei Unterschreiten des zweiten Schwellenwertes der Zählerstand eines Zähler geändert, vorzugsweise erniedrigt, wird.

12. Verfahren nach einem der Ansprüche 8 bis 11,
**dadurch gekennzeichnet,**
**dass** der erste und der zweite Schwellenwert unterschiedlich groß sind, insbesondere dass der erste Schwellenwert größer ist als der zweite Schwellenwert.

13. Verfahren nach einem der Ansprüche 9 bis 12,
**dadurch gekennzeichnet,**
**dass** ein Anhängerbetrieb erkannt wird, wenn ein erster vorgegebener Zählerstand des Zählers erreicht wird.

14. Verfahren nach einem der Ansprüche 9 bis 13,
**dadurch gekennzeichnet,**
**dass** ein Nicht-Anhängerbetrieb erkannt wird, wenn ein zweiter, vorzugsweise von dem ersten Zählerstand unterschiedlicher, vorgegebener Zählerstand des Zählers erreicht wird.

15. Verfahren nach einem der Ansprüche 9 bis 14,
**dadurch gekennzeichnet,**
**dass** der obere und/oder der untere Zählerstand begrenzt ist.

16. Verfahren nach einem der Ansprüche 1 bis 15,
**dadurch gekennzeichnet,**
**dass** die Auswertung des Ist-Fahrzeuglängsbeschleunigungssignals und des Soll- Fahrzeuglängsbeschleunigungsignals zur Anhängererkennung erst bei Überschreiten einer Mindestgeschwindigkeit, insbesondere von 60 km/h, vorzugsweise von 70 km/h, bevorzugt von 80 km/h, aktiviert wird.

17. Verfahren nach einem der Ansprüche 1 bis 16,
**dadurch gekennzeichnet,**
**dass** die Auswertung des Ist-Fahrzeuglängsbeschleunigungssignals und des Soll- Fahrzeuglängsbeschleunigungsignals zur Anhängererkennung erst bei Überschreiten einer Mindestfahrzeuglängsbeschleunigung aktiviert wird.

18. Verfahren nach einem der vorhergehenden Ansprüche,
**dadurch gekennzeichnet,**
**dass** die Auswertung des Ist-Signal und des Soll-Signals zur Anhängererkennung erst nach Überschreiten einer Mindestzeitspanne nach einem Bremsvorgang aktiviert wird.

19. Verfahren nach einem der vorhergehenden Ansprüche,
**dadurch gekennzeichnet,**
**dass** bei Erkennen eines Nicht-Anhängerbetriebs eine Anhängerschlingerlogik eines Fahrdynamikregelungssystems, vorzugsweise zeitweise, abgeschaltet oder desensibilisiert wird.

20. Verfahren nach einem der vorhergehenden Ansprüche,
**dadurch gekennzeichnet,**
**dass** bei erkanntem Anhängerbetrieb das Verhalten eines Fahrdynamikregelungssystems modifiziert wird, insbesondere eine Aktivierung von Fahrstabilisierungseingriffen, vorzugsweise von Fahrstabilisierungseingriffen zum Zwecke der Verringerung der speziell im Anhängerbetrieb auftretenden Instabilitäten, erfolgt.

21. Verfahren nach einem der vorhergehenden Ansprüche,
**dadurch gekennzeichnet,**
**dass** bei erkanntem Nicht-Anhängerbetrieb das Verhalten eines Fahrdynamikregelungssystems modifiziert wird, insbesondere eine Deaktivierung oder Abschwächung von Fahrstabilisierungseingriffen, vorzugsweise von Fahrstabilisierungseingriffen zum Zwecke der Verringerung der speziell im Anhängerbetrieb auftretenden Instabilitäten, erfolgt.

22. Verfahren nach einem der Ansprüche 16 bis 21,
**dadurch gekennzeichnet,**
**dass** bei Deaktivierung der Auswertung des Ist- und des Soll-Signals zur Anhängererkennung, beispielsweise bei Unterschreiten einer Mindestgeschwindigkeit, die verwendeten Größen, insbesondere ein Zählerstand, und/oder gesetzte oder nicht gesetzte Merker, zurückgesetzt werden.

23. Steuergerät zur Durchführung des Verfahrens nach einem der vorhergehenden Ansprüche.

## Claims

1. Method for detecting a trailer operation in a towing vehicle, in particular as part of a vehicle movement dynamics control system having a trailer jack-knifing logic for stabilizing the vehicle combination of the towing vehicle and the trailer, wherein the trailer operation is detected by comparing an actual signal which characterizes the driving state with a corresponding setpoint signal,
**characterized**
**in that** the actual signal is an actual vehicle longitudinal acceleration signal and the setpoint signal is a setpoint vehicle longitudinal acceleration signal.

2. Method according to Claim 1,
**characterized**
**in that** the setpoint signal is determined by means of a reference model with at least one input variable, in particular the accelerator pedal travel, and/or the accelerator pedal acceleration and/or the engine speed, and/or the current transmission ratio, and/or the initial pressure of the brakes.

3. Method according to one of the preceding claims,
**characterized**
**in that** in order to detect the trailer operation a comparison value is determined which corresponds to the difference between the setpoint vehicle longitudinal acceleration and the actual vehicle longitudinal acceleration, or the determination of which includes the difference between the setpoint vehicle longitudinal acceleration and the actual vehicle longitudinal acceleration.

4. Method according to Claim 3,
**characterized**
**in that** in order to form the difference an actual vehicle longitudinal acceleration which is measured by an acceleration sensor is subtracted from the setpoint vehicle longitudinal acceleration.

5. Method according to Claim 3,
**characterized**
**in that** in order to form the difference an actual vehicle longitudinal acceleration which is calculated taking into account at least one vehicle wheel rotational speed and/or vehicle wheel speed and/or vehicle wheel acceleration is subtracted from the setpoint vehicle longitudinal acceleration.

6. Method according to Claim 5,
**characterized**
**in that** the acceleration component caused by the inclination of the carriageway is removed from the comparison value.

7. Method according to Claim 6,
**characterized**
**in that** the correction of the comparison value is carried out by subtracting the measured actual vehicle longitudinal acceleration and adding the calculated actual vehicle longitudinal acceleration.

8. Method according to one of Claims 3 to 7,
**characterized**
**in that** said method is evaluated as a trailer operation if the comparison value exceeds a first threshold value.

9. Method according to Claim 8,
**characterized**
**in that** when the first threshold value is exceeded, the counter reading of a counter is changed, preferably incremented.

10. Method according to one of Claims 3 to 9,
**characterized**
**in that** said method is evaluated as a non-trailer operation if the comparison value undershoots a second threshold value.

11. Method according to Claim 10,
**characterized**
**in that** when the second threshold value is undershot, the counter reading of a counter is changed, preferably decreased.

12. Method according to one of Claims 8 to 11,
**characterized**
**in that** the first and second threshold values are of different sizes, in particular in that the first threshold value is larger than the second threshold value.

13. Method according to one of Claims 9 to 12,
**characterized**
**in that** a trailer operation is detected if a first predefined counter reading of the counter is reached.

14. Method according to one of Claims 9 to 13,
**characterized**
**in that** a non-trailer operation is detected if a second predefined counter reading of the counter, which is preferably different from the first counter reading, is reached.

15. Method according to one of Claims 9 to 14,
**characterized**
**in that** the upper and/or lower counter reading is limited.

16. Method according to one of Claims 1 to 15,
**characterized**
**in that** the evaluation of the actual vehicle longitudinal acceleration signal and of the setpoint vehicle longitudinal acceleration signal for detecting the trailer is not activated until a minimum speed, in particular 60 km/h, preferably 70 km/h, and more preferably 80 km/h, is exceeded.

17. Method according to one of Claims 1 to 16,
**characterized**
**in that** the evaluation of the actual vehicle longitudinal acceleration signal and of the setpoint vehicle longitudinal acceleration signal for detecting the trailer is not activated until a minimum vehicle longitudinal acceleration is exceeded.

18. Method according to one of the preceding claims,
**characterized**
**in that** the evaluation of the actual signal and of the setpoint signal for detecting the trailer is not activated until a minimum time period after a braking process is exceeded.

19. Method according to one of the preceding claims,
**characterized**
**in that** when a non-trailer operation is detected, a trailer jack-knifing logic of a vehicle movement dynamics control system is switched off or desensitized, preferably temporarily.

20. Method according to one of the preceding claims,
**characterized**
**in that** when a trailer operation is detected, the behaviour of a vehicle movement dynamics control system is modified, in particular driving stability interventions, preferably driving stability interventions for the purpose of reducing the instabilities occurring specifically during the trailer operation, are activated.

21. Method according to one of the preceding claims,
**characterized**
**in that** when a non-trailer operation is detected the behaviour of a vehicle movement dynamics control system is modified, in particular driving stability interventions, preferably driving stability interventions for the purpose of reducing the instabilities occurring specifically in the trailer operation, are deactivated or attenuated.

22. Method according to one of Claims 16 to 21,
**characterized**
**in that** when the evaluation of the actual and setpoint signals for the purpose of detecting the trailer is deactivated, for example when a minimum speed is undershot, the variables used, in particular a counter reading, and/or set or non-set markers, are reset.

23. Control unit for carrying out the method according to one of the preceding claims.

## Revendications

1. Procédé de détection du fonctionnement avec remorque d'un véhicule tracteur, en particulier dans le cadre d'un système de régulation de la dynamique du roulage qui présente une logique de roulis de remorque qui stabilise l'attelage constitué du véhicule tracteur et de la remorque, la détection du fonctionnement avec remorque s'effectuant par une comparaison entre un signal effectif qui caractérise l'état de roulage et un signal de consigne correspondant,
**caractérisé en ce que**
le signal effectif est un signal d'accélération longitudinale effectif du véhicule et le signal de consigne un signal d'accélération longitudinale de consigne du véhicule.

2. Procédé selon la revendication 1, **caractérisé en ce que** le signal de consigne est déterminé à l'aide d'un modèle de référence et avec au moins une grandeur d'entrée, en particulier la course de la pédale d'accélération, l'accélération de la pédale d'accélération, le régime du moteur, le rapport de transmission en cours et/ou la pression appliquée en amont des freins.

3. Procédé selon l'une des revendications précédentes, **caractérisé en ce que** pour détecter le fonctionnement avec remorque, une valeur de comparaison qui correspond à la différence entre l'accélération longitudinale de consigne du véhicule et l'accélération longitudinale effective du véhicule ou dans la détermination de laquelle intervient la différence entre l'accélération longitudinale de consigne du véhicule et l'accélération longitudinale effective du véhicule est déterminée.

4. Procédé selon la revendication 3, **caractérisé en ce que** pour former la différence, une accélération longitudinale effective du véhicule mesurée par une sonde d'accélération est soustraite de l'accélération longitudinale de consigne du véhicule.

5. Procédé selon la revendication 3, **caractérisé en ce que** pour former la différence, l'accélération longitudinale effective du véhicule est soustraite de l'accélération longitudinale de consigne du véhicule en tenant compte d'au moins la vitesse de rotation des roues du véhicule, de la vitesse des roues du véhicule et/ou de l'accélération des roues du véhicule.

6. Procédé selon la revendication 5, **caractérisé en ce que** la valeur de comparaison est nettoyée de la composante d'accélération provoquée par la pente de la chaussée.

7. Procédé selon la revendication 6, **caractérisé en ce que** le nettoyage de la valeur de comparaison s'effectue en soustrayant l'accélération longitudinale effective mesurée du véhicule et en additionnant l'accélération longitudinale effective calculée du véhicule.

8. Procédé selon l'une des revendications 3 à 7, **caractérisé en ce que** pour déterminer un fonctionnement avec remorque, il vérifie si la valeur de comparaison n'atteint pas une première valeur de seuil.

9. Procédé selon la revendication 8, **caractérisé en ce que** lorsque la première valeur de seuil est dépassée, l'état d'un compteur est modifié et de préférence augmenté.

10. Procédé selon l'une des revendications 3 à 9, **caractérisé en ce que** pour déterminer un fonctionnement sans remorque, il vérifie si la valeur de comparaison n'atteint pas une deuxième valeur de seuil.

11. Procédé selon la revendication 1, **caractérisé en ce que** lorsque la deuxième valeur de seuil n'est pas atteinte, l'état d'un compteur est modifié et de préférence diminué.

12. Procédé selon l'une des revendications 8 à 11, **caractérisé en ce que** la première et la deuxième valeur de seuil ont des valeurs différentes, en particulier **en ce que** la première valeur de seuil est supérieure à la deuxième valeur de seuil.

13. Procédé selon l'une des revendications 9 à 12, **caractérisé en ce qu'**un fonctionnement avec remorque est détecté si un premier état prédéterminé du compteur est atteint.

14. Procédé selon l'une des revendications 9 à 13, **caractérisé en ce qu'**un fonctionnement sans remorque est détecté si un deuxième état prédéterminé du compteur, de préférence différent du premier état du compteur, est atteint.

15. Procédé selon l'une des revendications 9 à 14, **caractérisé en ce que** l'état supérieur et/ou l'état inférieur du compteur sont limités.

16. Procédé selon l'une des revendications 1 à 15, **caractérisé en ce que** l'évaluation du signal d'accélération longitudinale effectif du véhicule et du signal d'accélération longitudinale de consigne du véhicule pour la détection du fonctionnement avec remorque n'est activée qu'après qu'une vitesse minimale, en particulier de 60 km/h, mieux de 70 km/h et de préférence de 80 km/h est dépassée.

17. Procédé selon l'une des revendications 1 à 16, **caractérisé en ce que** l'évaluation du signal d'accélération longitudinale effective du véhicule et du signal d'accélération longitudinale de consigne du véhicule pour la détection du fonctionnement avec remorque n'est activée que si une accélération longitudinale minimale du véhicule est dépassée.

18. Procédé selon l'une des revendications précédentes, **caractérisé en ce que** l'évaluation du signal effectif et du signal de consigne pour la détection du fonctionnement avec remorque n'est activée que si une durée minimale depuis une opération de freinage a été dépassée.

19. Procédé selon l'une des revendications précédentes, **caractérisé en ce que** lors de la détection d'un fonctionnement sans remorque, la logique de roulis de remorque du système de régulation de la dynamique du roulage est débranchée ou désensibilisée de préférence temporairement.

20. Procédé selon l'une des revendications précédentes, **caractérisé en ce que** lorsqu'un fonctionnement avec remorque est détecté, le comportement du système de régulation de la dynamique du roulage est modifié et en particulier a lieu l'activation d'interventions de stabilisation du roulage, de préférence d'interventions de stabilisation du roulage en vue de diminuer les instabilités qui surviennent en particulier lors d'un fonctionnement avec remorque.

21. Procédé selon l'une des revendications précédentes, **caractérisé en ce que** lorsqu'il est détecté que l'on travaille sans remorque, le comportement d'un système de régulation de la dynamique du roulage est modifié et en particulier a lieu la désactivation ou l'atténuation d'interventions de stabilisation du roulage, de préférence d'interventions de stabilisation du roulage en vue de diminuer les instabilités qui surviennent en particulier lors d'un fonctionnement avec remorque.

22. Procédé selon l'une des revendications 16 à 21, **caractérisé en ce que** lors de la désactivation de l'évaluation du signal effectif et du signal de consigne en vue de la détection du fonctionnement avec remorque, par exemple lorsqu'une vitesse minimale n'est pas atteinte, les grandeurs utilisées, en particulier l'état d'un compteur et/ou des pointeurs placés ou non placés, sont rétablies à leur ancienne valeur.

23. Appareil de commande en vue de l'exécution du procédé selon l'une des revendications précédentes.
